# EUROPÄISCHE PATENTSCHRIFT

(11) **EP 2 848 337 B1**
(45) Veröffentlichungstag und Bekanntmachung des Hinweises auf die Patenterteilung: **08.08.2018**
(21) Anmeldenummer: 14184297.1
(22) Anmeldetag: 10.09.2014
(51) Int. Cl.: B23B 31/16

(54) **Spannbackenanordnung**
Chuck jaw assembly
Agencement de mâchoire de serrage

(30) Priorität: 11.09.2013 DE 202013104141 U
(43) Veröffentlichungstag der Anmeldung: 18.03.2015
(73) Patentinhaber: Schunk GmbH & Co. KG Spann- und Greiftechnik, 74348 Lauffen am Neckar (DE)
(72) Erfinder: Mayer, Marco, 74348 Lauffen a.N. (DE); Geckeler, Andreas, 74336 Brackenheim (DE)
(74) Vertreter: Albrecht, Ralf

(56) Entgegenhaltungen:
- EP-A2- 0 098 348
- DE-C2- 3 512 929
- JP-A- S6 067 004
- JP-A- S61 182 708

## Beschreibung

Die vorliegende Erfindung betrifft eine Spannbackenanordnung mit einer Trägerbacke, die an ihrer Oberseite eine Auflagefläche definiert und an ihrem rückseitigen Endbereich einen über die Auflagefläche nach oben vorstehenden Fortsatz aufweist, und einer Wechselbacke, die auswechselbar auf den Fortsatz der Trägerbacke aufgesteckt wird oder aufsteckbar ist, wobei an der Rückseite der Wechselbacke zwei Haltewangen vorgesehen sind, die den Fortsatz der Trägerbacke seitlich umgreifen, und an dem Fortsatz der Trägerbacke und an den Innenseiten der Haltewangen Verbindungsstege und Verbindungsnuten, die einen vorgegebenen identischen Winkel α ≤ 90° mit der Auflagefläche einschließen und formschlüssig miteinander in Eingriff kommen, wenn die Wechselbacke von oben auf den Fortsatz der Trägerbacke gesteckt wird, ausgebildet sind, und wobei an der vorderen Stirnfläche des Fortsatzes der Trägerbacke und der rückseitigen Stirnfläche der Wechselbacke korrespondierende Anlageflächen vorgesehen sind, die miteinander in Anlage kommen, wenn die Wechselbacke auf die Trägerbacke gesteckt ist, und die mit der Auflagefläche der Trägerbacke einen vorgegebenen identischen Winkel γ ≤ 90° einschließen, und mit Sicherungsmitteln, um die Wechselbacke an der Trägerbacke gegen ein Abziehen zu sichern, wobei die Innenflächen der Haltewangen und die seitlichen Außenflächen des Fortsatzes im Bereich der Verbindungsstege und Verbindungsnuten im Querschnitt eine bogenförmige oder geschwungene Kontur besitzen. Insbesondere betrifft die vorliegende Erfindung dabei Spannbackenanordnungen, bei denen die Verbindungsstege und Verbindungsnuten unter einem vorgegebenen identischen Winkel α < 90° gegenüber der Auflagefläche geneigt sind und/oder bei denen die Sicherungsmittel in Form einer Sicherungsschraube ausgebildet sind, die in eine zur Oberseite des Fortsatzes der Träger hin offene Gewindebohrung des Fortsatzes einschraubbar ist, wobei die Wechselbacke eine Kontaktfläche aufweist, mit welcher die Sicherungsschraube beim Einschrauben in die Trägerbacke in Kontakt kommt, um die Wechselbacke an der Trägerbacke gegen ein Abziehen zu sichern.

Derartige Spannbackenanordnungen sind bekannt und kommen in unterschiedlichen Arten von Spanneinrichtungen zum Einsatz, um Bauteile zu fixieren. In der Automationstechnik werden Spannbacken an Greiferfingern von Greiferanordnungen eingesetzt, um Bauteile zum Transport zu greifen (zu spannen). Für Werkzeugmaschinen, wie beispielsweis Drehmaschinen und Fräsmaschinen, werden in erster Linie Spannfutter verwendet, die als Dreibackenfutter ausgebildet sind. Diese besitzen einen formsteifen Futterkörper, der eine zentrale Aufnahme für ein zu spannendes Werkstück aufweist, und drei Spannbacken, die in radialen Backenführungen des Futterkörpers angeordnet und durch Betätigung eines Stellantriebes gemeinsam radial nach innen oder nach außen bewegt werden können. Die Spannbacken können einstückig ausgebildet sein. In aller Regel kommen jedoch Spannbackenanordnungen zum Einsatz, die jeweils eine Grund- oder Trägerbacke, welche in dem Futterkörper gehalten ist, und eine Wechsel- oder Aufsatzbacke, die aus dem Futterkörper ragt und mit der Trägerbacke verbunden ist, aufweisen.

Bei einer Spannbackenanordnung der eingangs genannten Art, welche aus der DE 35 12 929 C2 bekannt ist, erfolgt die Verbindung zwischen der Wechselbacke und der Trägerbacke, indem die Wechselbacke von oben auf die Trägerbacke gesteckt wird. Hierzu sind an einem rückseitigen, nach oben vorstehenden Fortsatz der Trägerbacke und an der Wechselbacke Verbindungsstege und Verbindungsnuten ausgebildet, die gegenüber einer Auflagefläche der Trägerbacke, auf welcher die Wechselbacke zum Liegen kommt, unter einem stumpfen Winkel geneigt sind und die formschlüssig miteinander in Eingriff kommen, wenn die Wechselbacke von oben auf die Trägerbacke gesteckt wird. Dabei sind an der vorderen Stirnfläche des Fortsatzes der Trägerbacke und einer rückseitigen Stirnfläche der Wechselbacke korrespondierende Anlageflächen vorgesehen, die miteinander in Anlage kommen, wenn die Wechselbacke auf die Trägerbacke gesteckt ist. Ferner sind Sicherungsmittel vorgesehen, um ein Abziehen der Wechselbacke von der Trägerbacke zu verhindern. Die Sicherungsmittel umfassen hier ein Sicherungselement, das in einer Bohrung des Fortsatzes der Trägerbacke verschiebbar gehalten ist, und durch eine Druckfeder in eine Ausnehmung, die in der rückseitigen Anlagefläche der Wechselbacke ausgebildet ist, gedrückt wird.

Alternativ ist bekannt, eine Sicherungsschraube zu verwenden, die in eine zur Oberseite des Fortsatzes der Trägerbacke hin offene Gewindebohrung des Fortsatzes eingeschraubt wird, wobei die Wechselbacke eine Kontaktfläche aufweist, mit welcher die Sicherungsschraube beim Einschrauben in die Trägerbacke in Kontakt kommt, um die Wechselbacke an der Trägerbacke gegen ein Abziehen zu sichern.

Die bekannten Spannbackenanordnungen haben sich in der Praxis durchaus bewährt. Die Bestrebungen gehen jedoch dahin, die Spannpräzision zu erhöhen und dabei insbesondere das fertigungsbedingte Spiel zwischen der Trägerbacke und der Wechselbacke in deren Verbindungsbereich zu minimieren.

Diese Aufgabe ist erfindungsgemäß durch eine Spannbackenanordnung mit den Merkmalen des Patentanspruchs 1 oder durch eine Spannbackenanordnung mit den Merkmalen des Patentanspruchs 5 gelöst. Gemäß dem unabhängigen Anspruch 1 besitzen die Innenflächen der Haltewangen und die seitlichen Außenflächen des Fortsatzes im Bereich der Verbindungsstege und Verbindungsnuten im Querschnitt eine bogenförmige oder geschwungene Kontur. Dabei können die Innenflächen der Haltewangen und die Außenflächen des Fortsatzes im Bereich der Verbindungsstege und/oder der Verbindungsnuten über ihre gesamte Länge oder wenigstens über einen Großteil Länge bogenförmig oder geschwungen ausgebildet sein. Nach Möglichkeit sind hierbei die Übergänge stetig, d.h. ohne Kantenbildung. Desweiteren sollten die bogenförmigen Bereiche wenigstens 75, insbesondere wenigstens 85 und bevorzugt wenigstens 95% der Länge der Kontur ausmachen. Aufgrund der abgerundeten Konturen sind die Verbindungsbereiche zwischen dem Fortsatz und der Wechselbacke verschmutzungsarm, wodurch eine hohe Präzision erreicht wird. Desweiteren wird das Auftreten von Spannungen aufgrund von Kerbwirkungen verringert. Die Anordnung ist dabei bevorzugt so getroffen, dass die Innenflächen der Haltewangen und die seitlichen Außenflächen des Fortsatzes in der Weise komplementär ausgebildet sind, dass die Verbindungsstege/Verbindungsnuten zumindest im Wesentlichen flächig in Anlage kommen.

Die Verbindungsstege und/oder Verbindungsnuten können eine wellenartige Kontur bilden. Insbesondere kann vorgesehen sein, dass Haltewangen an ihren Innenseiten jeweils eine wellenartige Kontur mit einem wellentalartigen Abschnitt, der eine Verbindungsnut zur Aufnahme eines Verbindungsstegs der Trägerbacke bildet und mit einem daran anschließenden wellenbergartigen Abschnitt, der einen Verbindungssteg bildet, der an der Rückseite des Verbindungsstegs der Trägerbacke in Anlage kommt, besitzen. Gemäß dem unabhängigen Anspruch 5 ist der Winkel α, unter welchem die Verbindungsstege und Verbindungsnuten gegenüber der Auflagefläche geneigt sind, kleiner als der Winkel γ, welchen die Anlageflächen mit der Auflagefläche einschließen. Dadurch, dass die Neigung der Verbindungsstege und Verbindungsnuten flacher ist als die der Auflagefläche, wird bei dieser Ausgestaltung ebenfalls die Anlagefläche der Wechselbacke gegen die korrespondierende Anlagefläche der Trägerbacke gezogen, wenn die Wechselbacken auf die Trägerbacken gesteckt sind. Dabei kann der Winkel, unter welchem die Verbindungsstege und Verbindungsnuten gegenüber der Auflagefläche geneigt sind, bevorzugt um wenigstens 0,1°, insbesondere wenigstens 0,3° und bevorzugt wenigstens 0,5° und/oder maximal 8°, insbesondere maximal 6° und bevorzugt maximal 5°, kleiner ist als der Winkel γ, welchen die Anlageflächen mit der Auflagefläche einschließen.

Die Sicherungsmittel sind bevorzugt derart ausgestaltet und/oder positioniert, dass sie auf die Wechselbacke eine in Richtung der Auflagefläche des Fortsatzes der Trägerbacke gerichtete Druckkraft ausüben. Dieser Ausgestaltung liegt die Überlegung zugrunde, über die Sicherungsmittel eine Druckkraft auf die Wechselbacke auszuüben, so dass diese zuverlässig gegen die Anlageflächen der Trägerbacke gepresst wird.

Zweckmäßigerweise ist vorgesehen, dass die Sicherungsmittel eine Sicherungsschraube aufweisen, die in eine zur Oberseite des Fortsatzes der Trägerbacke hin offene Gewindebohrung des Fortsatzes einschraubbar ist, wobei die Wechselbacke eine Kontaktfläche aufweist, mit welcher die Sicherungsschraube beim Einschrauben in die Trägerbacke in Kontakt kommt, um die Wechselbacke an der Trägerbacke gegen ein Abziehen zu sichern, und dass die Gewindebohrung mit der Auflagefläche einen Winkel β <90° einschließt, so dass die Wechselbacke beim Eindrehen der Sicherungsschraube in Richtung der Anlagefläche des Fortsatzes der Trägerbacke gedrückt wird.

Durch die schräg gestellte Gewindebohrung wird beim Eindrehen der Sicherungsschraube eine zu der Anlagefläche des Fortsatzes der Trägerbacke hin gerichtete Druckkraft auf die Wechselbacke ausgeübt, so dass die Wechselbacke sicher gegen die Anlagefläche der Trägerbacke gedrückt wird. Durch den flächigen Kontakt zwischen der Trägerbacke und der Wechselbacke im Bereich von deren Anlageflächen erfolgt eine saubere Positionierung der Wechselbacke unter Ausschaltung des Spiels im Bereich der Verbindungsstege und Verbindungsnuten.

Dabei können die Anlageflächen an der vorderen Stirnfläche des Fortsatzes und der rückseitigen Stirnfläche der Wechselbacke mit der Auflagefläche einen Winkel von 90° einschließen. In bevorzugter Weise sind die Anlageflächen jedoch unter einem vorgegeben identischen Winkel < 90° gegenüber der Auflagefläche geneigt. Gemäß einer bevorzugten Ausführungsform der Erfindung ist vorgesehen, dass der Winkel β, welchen die Gewindebohrung mit der Auflagefläche einschließt, gleichgroß oder kleiner ist als der Winkel α, unter welchem die Verbindungsstege und Verbindungsnuten gegenüber der Auflagefläche geneigt sind, und/oder als der Winkel y, unter welchem die Anlageflächen gegenüber der Auflagefläche geneigt sind.

In besonderer Weise sind die Neigungswinkel der Verbindungsstege und Verbindungsnuten, der Gewindebohrung und der Anlageflächen gleich groß.

Gemäß einer weiteren Ausführungsform der Erfindung ist vorgesehen, dass in dem Fortsatz der Trägerbacke eine Ausnehmung zur Aufnahme des Kopfes der Sicherungsschraube ausgebildet ist, wobei der Boden der Ausnehmung insbesondere in einer senkrecht zur Achse der Gewindebohrung liegenden Ebene liegt. Dabei kann die Wechselbacke an ihrer Oberseite eine Vertiefung aufweisen, an deren Boden die Kontaktfläche ausgebildet ist, welche ebenfalls in einer senkrecht zur Achse der Gewindebohrung stehenden Ebene liegen kann.

Gemäß einer weiteren Alternative oder zusätzlich kann vorgesehen sein, dass an der Trägerbacke elastische Spannmittel vorgesehen sind, welche auf die Wechselbacke eine Druckkraft ausüben, durch welche die Anlagefläche der Wechselbacke in Richtung der Anlagefläche des Fortsatzes der Trägerbacke gedrückt wird, wenn die Wechselbacke auf die Trägerbacke gesteckt ist. In bevorzugter Weise ist dabei vorgesehen, dass die elastischen Spannmittel Druckfederelemente aufweisen, die in entsprechenden Aufnahmen in dem Fortsatz der Trägerbacke gehalten sind und in Kontakt mit Verbindungsstegen der Wechselbacke stehen, wenn die Wechselbacke auf die Trägerbacke gesteckt ist, um eine von der Anlagefläche der Trägerbacke weg gerichtete Druckkraft auf die Verbindungsstege auszuüben.

Bei dieser Ausgestaltung wird durch die elastischen Spannmittel und insbesondere die Druckfederelemente eine Druckkraft auf die Wechselbacke ausgeübt, durch welche die Wechselbacke gegen die Anlagefläche der Trägerbacke gedrückt wird. Die elastischen Spannmittel sind dabei bevorzugt so ausgebildet oder angeordnet, dass die Druckkraft auf die Wechselbacke in deren unterem Bereich ausgeübt wird.

Schließlich kann vorgesehen sein, dass die Wechselbacke die Trägerbacke im aufgesteckten Zustand derart übergreift, dass zwei Haltestege an gegenüberliegenden Seitenflächen der Trägerbacke in Anlage kommen, um die Wechselbacke an der Trägerbacke zu positionieren.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Spannbackenanordnung gemäß der vorliegenden Erfindung in perspektivischer Ansicht von schräg oben,
- Figur 2: die Spannbackenanordnung in perspektivischer Ansicht von schräg unten,
- Figur 3: die Spannbackenanordnung aus Figur 1 in Vorderansicht,
- Figur 4: die Spannbackenanordnung aus Figur 3 in einer Seitenansicht von rechts betrachtet,
- Figur 5: die Spanbackenanordnung aus Figur 1 in Draufsicht,
- Figur 6: die Spannbackenanordnung im Schnitt D-D von Figur 5,
- Figur 7: die Spannbackenanordnung aus Figur 3 in einer Seitenansicht von links betrachtet,
- Figur 8: eine Trägerbacke einer weiteren Spannbackenanordnung gemäß der vorliegenden Erfindung in Vorderansicht,
- Figur 9: eine Trägerbacke einer dritten Spannbackenanordnung gemäß der vorliegenden Erfindung in Vorderansicht,
- Figur 10: die Trägerbacke in einer Seitenansicht von rechts betrachtet, und
- Figur 11: die Trägerbacke aus Figur 9 in Draufsicht, wobei der Fortsatz der Trägerbacke geschnitten dargestellt ist.

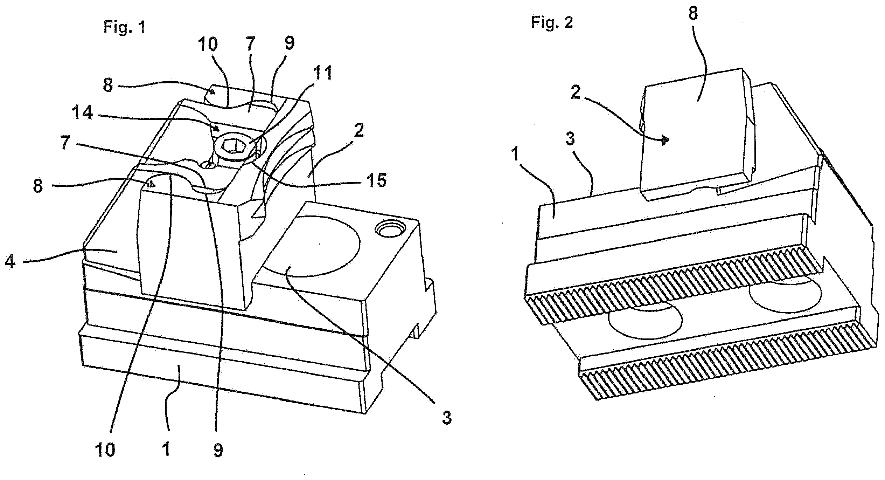

In den Figuren 1 bis 7 ist eine erste Ausführungsform einer Spannbackenanordnung gemäß der vorliegenden Erfindung dargestellt, die insbesondere für den Einsatz in herkömmlichen Dreibackenfuttern sowie Greifereinrichtungen bestimmt ist, aber auch bei anderen Spann- oder Greifereinrichtung eingesetzt werden kann. Die Spannbackenanordnung umfasst eine Trägerbacke 1, die beim Einsatz in einem Spannfutter in eine radiale Führungsnut des Futterkörpers eingesetzt und darin in ihrer Längsrichtung bewegbar geführt ist, und eine Wechselbacke 2, die aus dem Futterkörper ragt und an der Oberseite der Trägerbacke 1 befestigt ist. Die Trägerbacke 1 definiert dabei an ihrer Oberseite eine Auflagefläche 3, auf welcher die Wechselbacke 2 zum Liegen kommt.

Die Trägerbacke 1 weist an ihrem rückseitigen Endbereich einen über die Auflagefläche 3 nach oben vorstehenden Fortsatz 4 auf, der an seiner vorderseitigen Stirnfläche eine Anlagefläche 5 bildet, an der eine korrespondierende Anlagefläche 6 an der rückseitigen Stirnfläche der Wechselbacke 2 in Anlage kommt, wenn die Wechselbacke 2 an der Trägerbacke 1 fixiert ist. Die Anlageflächen 5, 6 sind dabei unter einem identischen Winkel γ von 85° gegenüber der Auflagefläche 3 der Trägerbacke 1 geneigt.

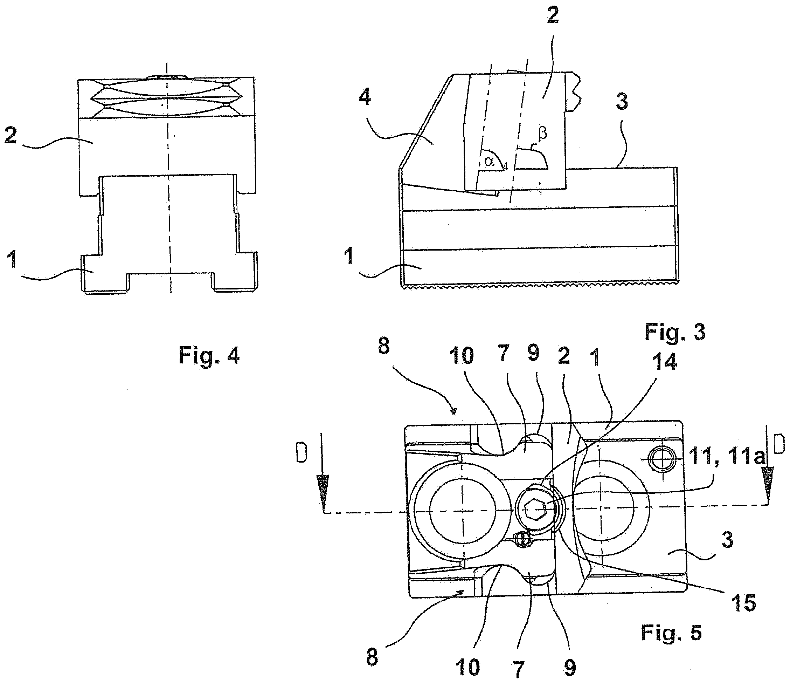

An den beiden gegenüberliegenden Seitenflächen des Fortsatzes 4 sind Verbindungsstege 7 ausgebildet, auf welche die Wechselbacke 2 von oben aufgesteckt ist. Hierzu weist die Wechselbacke 2 an ihrer Rückseite seitliche Haltewangen 8 auf, die den Fortsatz 4 seitlich umgreifen und an denen innenseitig jeweils eine zu dem Verbindungssteg 7 an der korrespondierenden Seitenfläche der Trägerbacke 1 entsprechende Verbindungsnut 9 und ein sich daran anschließender Verbindungssteg 10 ausgebildet sind. Die Verbindungsnuten 9 und Verbindungsstege 10 sind dabei gegenüber der Auflagefläche 3 der Trägerbacke 1 unter einem Winkel α, der hier etwa 85° beträgt, geneigt. Insbesondere in der Figur 5 ist gut erkennbar, dass die Innenkontur der Haltewangen 8 der Wechselbacke 2 im Bereich der Verbindungsnuten 9 und Verbindungsstege 10 wellenartig geschwungen ausgebildet sind. Entsprechend geschwungen sind auch die Verbindungsstege 7 an den äußeren Seitenwänden des Fortsatzes 4 der Trägerbacke 1 ausgebildet, so dass die Verbindungsstege 7, 10 an der Trägerbacke 1 einerseits und der Wechselbacke 2 andererseits in ihrem Kontaktbereich flächig in Anlage kommen. Aufgrund der stetigen Übergänge können Schmutzansammlungen vermieden werden.

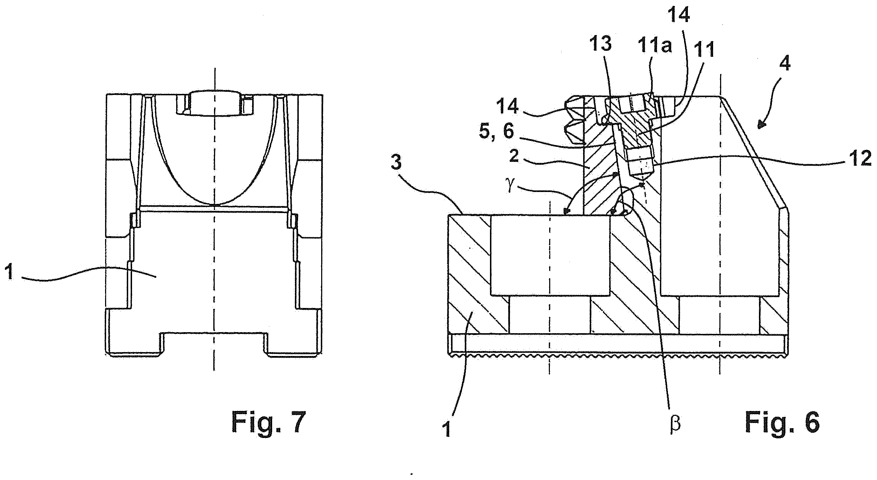

Zur Sicherung der Wechselbacke 2 an der Trägerbacke 1 ist eine Sicherungsschraube 11 vorgesehen. Diese ist in eine Gewindebohrung 12 eingeschraubt, die im Fortsatz 4 der Trägerbacke 1 ausgebildet ist und in dessen Oberseite mündet. Die Gewindebohrung 12 ist gegenüber der Auflagefläche 3 geneigt und schließt mit dieser einen Winkel β ein, der hier wiederum 85° beträgt, so dass die Neigungswinkel α β γ der Verbindungsstege/Verbindungsnuten 7, 9, 10, der Anlageflächen 5, 6 und der Gewindebohrung 12 gleich groß ist. Die Gewindebohrung 12 ist derart positioniert, dass der Kopf 11a der Sicherungsschraube 11 beim Einschrauben in die Trägerbacke 1 mit einer entsprechenden Kontaktfläche 13 der Wechselbacke 2 in Kontakt kommt, so dass die Wechselbacke 2 einerseits in Richtung der Auflagefläche 3 der Trägerbacke 1 niedergedrückt und zudem gegen die Anlagefläche 5 der Trägerbacke 1 gedrückt wird. Wie in der Figur 6 erkennbar ist, ist in dem Fortsatz 4 der Trägerbacke 1 eine Ausnehmung 14 zur Aufnahme des Kopfes 11a der Sicherungsschraube 11 ausgebildet, wobei der Boden der Ausnehmung 14 in einer senkrecht zur Achse der Gewindebohrung 12 liegenden Ebene liegt. Die Wechselbacke 2 weist an ihrer Oberseite eine entsprechende Vertiefung 15 auf, deren Boden die Kontaktfläche 13 definiert, die in einer senkrecht zur Achse der Gewindebohrung liegenden Ebene liegt.

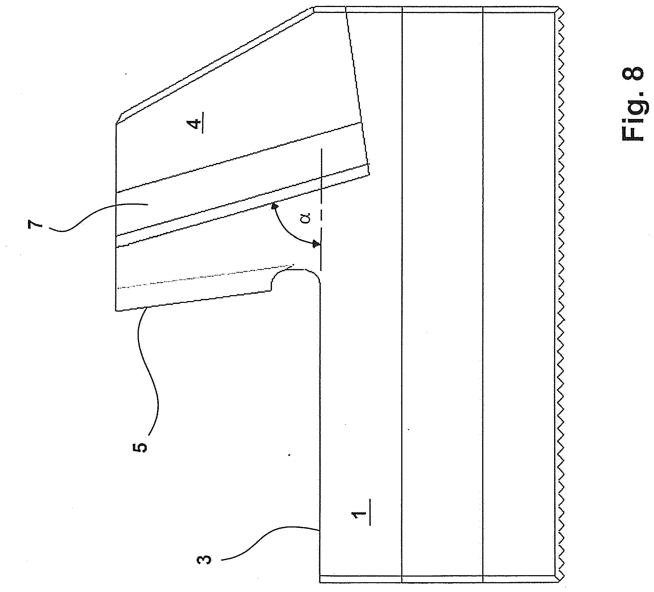

In der Figur 8 ist eine Trägerbacke 1 einer weiteren Spannbackenanordnung gemäß der vorliegenden Erfindung dargestellt. Diese definiert an ihrer Oberseite eine Auflagefläche 3 für eine nicht dargestellte Wechselbacke 2 und weist an ihrem rückseitigen Endbereich eine über die Auflagefläche 3 nach oben vorstehenden Fortsatz 4 auf. An der vorderen Stirnfläche des Fortsatzes 4 ist eine Anlagefläche 5 ausgebildet. Des Weiteren ist in Figur 8 erkennbar, dass an den äußeren Seitenflächen des Fortsatzes 4 jeweils ein nach außen abstehender Verbindungssteg 7 vorgesehen ist. Insofern entspricht die Trägerbacke 1 der Figur 8 der Trägerbacke 1 aus der zuvor beschriebenen ersten Ausführungsform einer erfindungsgemäßen Spannbackenanordnung. Im Unterschied zu dieser ist der Winkel α, unter dem die Verbindungsstege 7 und damit auch die Verbindungsnuten der korrespondierenden Wechselbacke 2 gegenüber der Auflagefläche 3 geneigt sind, flacher als der Neigungswinkel γ, welchen die Anlagefläche 5 der Trägerbacke 1 und damit auch die Anlagefläche der Wechselbacke 2 mit der Auflagefläche 3 einschließen. Der Winkelunterschied ist hier übertrieben dargestellt und beträgt etwa 1 bis 2°. Der Winkelunterschied bewirkt, dass die Wechselbacke 2 gegen die Anlagefläche 5 der Trägerbacke 1 gezogen wird, wenn die Wechselbacke 2 auf den Fortsatz 4 der Trägerbacke 1 geschoben und die formschlüssige Verbindung zwischen den Verbindungsstegen 7 der Trägerbacke 1 und den Verbindungsstegen 10 /Verbindungsnuten 9 der Wechselbacke 2 hergestellt wird.

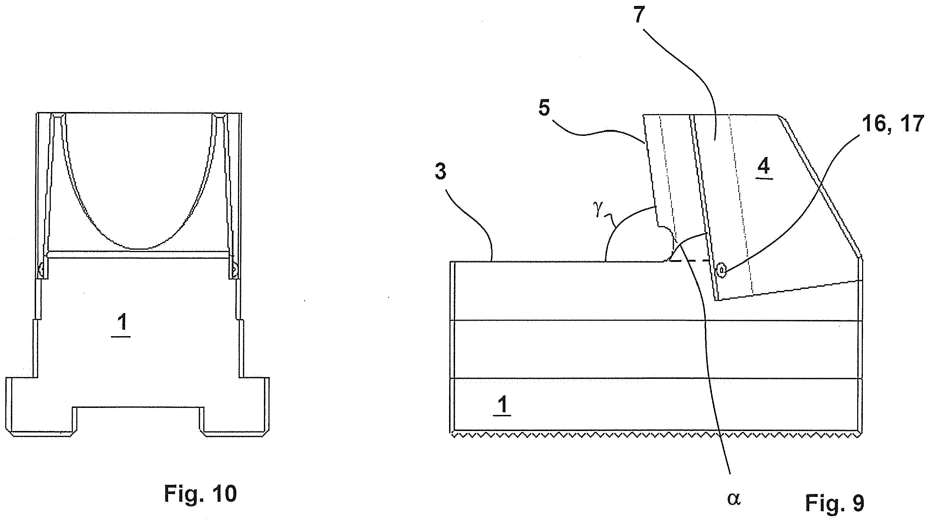

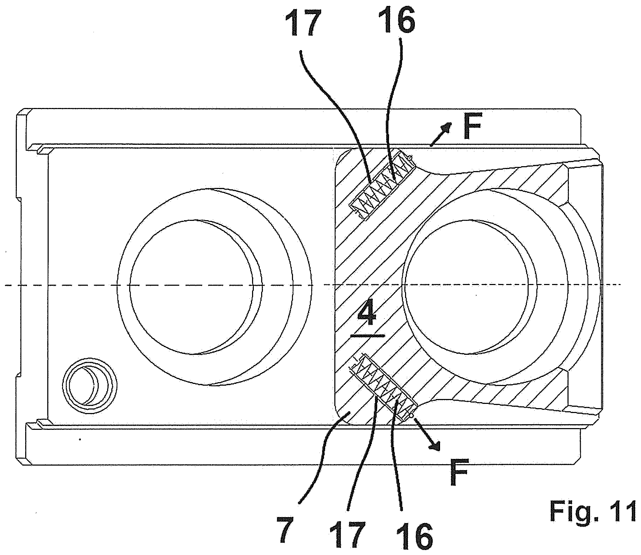

In den Figuren 9 bis 11 ist schließlich die Trägerbacke 1 einer dritten Ausführungsform einer erfindungsgemäßen Spannbackenanordnung dargestellt. Diese besitzt den gleichen Aufbau wie die Trägerbacke 1 der in den Figuren 1 bis 7 beschriebenen ersten Ausführungsform einer erfindungsgemäßen Spannbackenanordnung. Insbesondere sind hier die Verbindungsstege 7 an dem nach oben ragenden Fortsatz 4 der Trägerbacke 1 unter dem gleichen Winkel α gegenüber der Auflagefläche 3 der Trägerbacke 1 geneigt wie die Anlagefläche 5, welche an der vorderen Stirnfläche des Fortsatzes 4 ausgebildet ist. Wie insbesondere die Figur 11 gut erkennen lässt, sind an der Trägerbacke 1 elastische Spannmittel vorgesehen, welche auf die Wechselbacke 2 eine Druckkraft ausüben, durch welche die Anlagefläche 6 der Wechselbacke 2 in Richtung der Anlagefläche 5 des Fortsatzes 4 der Trägerbacke 1 gedrückt wird, wenn die Wechselbacke 2 auf die Trägerbacke 1 gesteckt ist. Die elastischen Spannmittel sind hier in der Form von Druckfederelementen 16 ausgebildet, die in entsprechenden Aufnahmen - hier Aufnahmebohrungen 17 - in dem Fortsatz 4 der Trägerbacke 1 gehalten sind und in Kontakt mit den Verbindungsstegen 10 der Wechselbacke 2 stehen, wenn die Wechselbacke 2 auf die Trägerbacke 1 gesteckt ist, um eine von der Anlagefläche 5 der Trägerbacke 1 weg gerichtete Druckkraft F auf die Verbindungsstege auszuüben. Wie die Figur 9 erkennen lässt, sind die Druckfederelemente 16 in einem unteren Bereich des Fortsatzes 4 und hier sogar unterhalb der Auflagefläche 3 positioniert, so dass die von den Druckfederelementen 16 ausgeübten Druckkräfte F in den unteren Bereich der Wechselbacke 2 eingeleitet werden. Auf diese Weise wird sichergestellt, dass die Anlagefläche 6 der Wechselbacke 2 flächig an der Anlagefläche 5 der Trägerbacke 1 und in engem Kontakt zu dieser anliegt.

## Patentansprüche

1. Spannbackenanordnung mit einer Trägerbacke (1), die an ihrer Oberseite eine Auflagefläche (3) definiert und an ihrem rückseitigen Endbereich einen über die Auflagefläche (3) nach oben vorstehenden Fortsatz (4) aufweist, und einer Wechselbacke (2), die auswechselbar auf den Fortsatz (4) der Trägerbacke (1) aufgesteckt wird oder aufsteckbar ist, wobei an der Rückseite der Wechselbacke (2) zwei Haltewangen (8) vorgesehen sind, die den Fortsatz (4) der Trägerbacke (1) seitlich umgreifen, und an dem Fortsatz (4) der Trägerbacke (1) und an den Innenseiten der Haltewangen (8) Verbindungsstege (7, 10) und Verbindungsnuten (9), die einen vorgegebenen identischen Winkel (α) ≤ 90° mit der Auflagefläche (3) einschließen und formschlüssig miteinander in Eingriff kommen, wenn die Wechselbacke (2) von oben auf den Fortsatz (4) der Trägerbacke (1) gesteckt wird, ausgebildet sind, und wobei an der vorderen Stirnfläche des Fortsatzes (4) der Trägerbacke (1) und der rückseitigen Stirnfläche der Wechselbacke (2) korrespondierende Anlageflächen (5, 6) vorgesehen sind, die miteinander in Anlage kommen, wenn die Wechselbacke (2) auf die Trägerbacke (1) gesteckt ist, und die mit der Auflagefläche (3)der Trägerbacke (1) einen vorgegebenen identischen Winkel (γ) ≤ 90° einschließen, und mit Sicherungsmitteln (11), um die Wechselbacke (2) an der Trägerbacke (1) gegen ein Abziehen zu sichern, **dadurch gekennzeichnet, dass** die Innenflächen der Haltewangen (8) und die seitlichen Außenflächen des Fortsatzes (4) im Bereich der Verbindungsstege (7, 10) und Verbindungsnuten (9) im Querschnitt eine bogenförmige oder geschwungene Kontur besitzen.

2. Spannbackenanordnung nach Anspruch 1, **dadurch gekennzeichnet, dass** die Innenflächen der Haltewangen (8) und die Außenflächen des Fortsatzes (4) im Bereich der Verbindungsstege (7, 10) und/oder der Verbindungsnuten (9) über ihre gesamte Länge oder wenigstens über einen Großteil ihrer Länge bogenförmig oder geschwungen ausgebildet ist.

3. Spannbackenordnung nach Anspruch 1 oder 2, **dadurch gekennzeichnet, dass** die Verbindungsstege (7, 10) und/oder Verbindungsnuten (9) eine wellenartige Kontur bilden.

4. Spannbackenanordnung nach einem der vorherigen Ansprüche, **dadurch gekennzeichnet, dass** die Haltewangen (8) an ihren Innenseiten jeweils eine wellenartige Kontur mit einem wellentalartigen Abschnitt, der eine Verbindungsnut (9) zur Aufnahme eines Verbindungsstegs (7) der Trägerbacke (1) bildet und mit einem daran anschließenden wellenbergartigen Abschnitt, der einen Verbindungssteg (10) bildet, der an der Rückseite des Verbindungsstegs (7) der Trägerbacke (1) in Anlage kommt, besitzen.

5. Spannbackenanordnung mit einer Trägerbacke (1), die an ihrer Oberseite eine Auflagefläche (3) definiert und an ihrem rückseitigen Endbereich einen über die Auflagefläche (3) nach oben vorstehenden Fortsatz (4) aufweist, und einer Wechselbacke (2), die auswechselbar auf den Fortsatz (4) der Trägerbacke (1) aufgesteckt wird oder aufsteckbar ist, wobei an der Rückseite der Wechselbacke (2) zwei Haltewangen (8) vorgesehen sind, die den Fortsatz (4) der Trägerbacke (1) seitlich umgreifen, und an dem Fortsatz (4) der Trägerbacke (1) und an den Innenseiten der Haltewangen (8) Verbindungsstege (7, 10) und Verbindungsnuten (9), die einen vorgegebenen identischen Winkel (α) ≤ 90° mit der Auflagefläche (3) einschließen und formschlüssig miteinander in Eingriff kommen, wenn die Wechselbacke (2) von oben auf den Fortsatz (4) der Trägerbacke (1) gesteckt wird, ausgebildet sind, und wobei an einer vorderen Stirnfläche des Fortsatzes (4) der Trägerbacke (1) und einer rückseitigen Stirnfläche der Wechselbacke (2) korrespondierende Anlageflächen (5, 6) vorgesehen sind, die miteinander in Anlage kommen, wenn die Wechselbacke (2) auf die Trägerbacke (1) gesteckt ist, und die mit der Auflagefläche (3)der Trägerbacke (1) einen vorgegebenen identischen Winkel (γ) ≤ 90° einschließen, und mit Sicherungsmitteln (11), um die Wechselbacke (2) an der Trägerbacke (1) gegen ein Abziehen zu sichern, **dadurch gekennzeichnet, dass** der Winkel (α), unter welchem die Verbindungsstege (7, 10) und Verbindungsnuten (9) gegenüber der Auflagefläche (3) geneigt sind, kleiner ist als der Winkel (γ), welchen die Anlageflächen (5, 6) mit der Auflagefläche (3) einschließen.

6. Spannbackenanordnung nach Anspruch 5, **dadurch gekennzeichnet, dass** der Winkel (α), unter welchen die Verbindungsstege (7, 10) und Verbindungsnuten (9) gegenüber der Auflagefläche (3) geneigt sind, um wenigstens 0,1°, insbesondere wenigstens 0,3° und bevorzugt wenigstens 0,5° und/oder maximal 8°, insbesondere maximal 6° und bevorzugt maximal 5°, kleiner ist als der Winkel (γ), welchen die Anlageflächen (5, 6) mit der Auflagefläche (3) einschließen.

7. Spannbackenanordnung nach einem der vorherigen Ansprüche, **dadurch gekennzeichnet, dass** die Sicherungsmittel eine Sicherungsschraube (11) aufweisen, die in eine zur Oberseite des Fortsatzes (4) der Trägerbacke (1) hin offene Gewindebohrung (12) des Fortsatzes (4) einschraubbar ist, wobei die Wechselbacke (2) eine Kontaktfläche (13) aufweist, mit welcher die Sicherungsschraube (11) beim Einschrauben in die Trägerbacke (1) in Kontakt kommt, um die Wechselbacke (2) an der Trägerbacke (1) gegen ein Abziehen zu sichern.

8. Spannbackenanordnung nach Anspruch 7, **dadurch gekennzeichnet, dass** die Gewindebohrung (12) mit der Auflagefläche (3) einen Winkel (β) < 90° einschließt, so dass die Wechselbacke (2) beim Eindrehen der Sicherungsschraube (11) in Richtung der Anlagefläche (5) des Fortsatzes (4) der Trägerbacke (1) gedrückt wird.

9. Spannbackenanordnung nach Anspruch 7 oder 8, **dadurch gekennzeichnet, dass** in dem Fortsatz (4) der Trägerbacke (1) eine Ausnehmung (14) zur Aufnahme des Kopfes (11a) der Sicherungsschraube (11) ausgebildet ist, wobei der Boden der Ausnehmung (14) insbesondere in einer senkrecht zur Achse der Gewindebohrung (12) liegenden Ebene liegt.

10. Spannbackenanordnung nach einem der Ansprüche 7 bis 9, **dadurch gekennzeichnet, dass** die Wechselbacke (2) an ihrer Oberseite eine Vertiefung (15) aufweist, an deren Boden die Kontaktfläche (13) ausgebildet ist.

11. Spannbackenanordnung nach einem der vorherigen Ansprüche, **dadurch gekennzeichnet, dass** an der Trägerbacke (1) elastische Spannmittel vorgesehen sind, welche auf die Wechselbacke (2) eine Druckkraft ausüben, durch welche die Anlagefläche (6) der Wechselbacke (2) in Richtung der Anlagefläche (5) des Fortsatzes (4) der Trägerbacke (1) gedrückt wird, wenn die Wechselbacke (2) auf die Trägerbacke (1) gesteckt ist.

12. Spannbackenanordnung nach Anspruch 11, **dadurch gekennzeichnet, dass** die elastischen Spannmittel Druckfederelemente (16) aufweisen, die in entsprechenden Aufnahmen (17) in dem Fortsatz (4) der Trägerbacke (1) gehalten sind und jeweils in Kontakt mit einem Verbindungssteg (10) der Wechselbacke (2) stehen, wenn die Wechselbacke (2) auf die Trägerbacke (1) gesteckt ist, um eine von der Anlagefläche (5) der Trägerbacke (1) weg gerichtete Druckkraft auf die Verbindungsstege (10) auszuüben.

13. Spannbackenanordnung nach Anspruch 12, **dadurch gekennzeichnet, dass** die elastischen Spannmittel (16) insbesondere derart positioniert sind, dass sie die Druckkraft auf einen unteren Bereich der Wechselbacke (2) ausüben, wenn die Wechselbacke (2) auf die Trägerbacke (1) gesteckt ist.

14. Spannbackenanordnung nach einem der vorherigen Ansprüche, **dadurch gekennzeichnet, dass** die Wechselbacke (2) die Trägerbacke (1) im aufgesteckten Zustand derart übergreift, dass zwei Haltestege an gegenüberliegenden Seitenflächen der Trägerbacke (1) in Anlage kommen, um die Wechselbacke an der Trägerbacke (1) zu positionieren.

## Claims

1. Clamping jaw arrangement with a carrier jaw (1), which defines a support surface (3) on its upper side and has an extension (4) projecting upwards beyond the support surface (3) at its rear end region, and an exchangeable jaw (2), which is exchangeably attached or can be attached to the extension (4) of the carrier jaw (1), two retaining cheeks (8) being provided on the rear side of the exchangeable jaw (2), which laterally encircle the extension (4) of the carrier jaw (1), and connecting webs (7, 10) and connecting grooves (9) being formed on the extension (4) of the carrier jaw (1) and on the inner sides of the retaining cheeks (8), which enclose a predetermined identical angle (α) ≤ 90° with the support surface (3) and engage positively with one another when the exchangeable jaw (2) is inserted from above onto the extension (4) of the carrier jaw (1), and wherein corresponding contact surfaces (5, 6) are provided on the front end face of the extension (4) of the carrier jaw (1) and the rear end face of the exchangeable jaw (2), which contact surfaces come into contact with one another when the exchange jaw (2) is inserted onto the carrier jaw (1), and which enclose a predetermined identical angle (γ) ≤ 90° with the support surface (3) of the carrier jaw (1), and with securing means (11) for securing the exchangeable jaw (2) on the carrier jaw (1) against removal, **characterized in that** the inner surfaces of the retaining cheeks (8) and the lateral outer surfaces of the extension (4) in the region of the connecting webs (7, 10) and connecting grooves (9) have an arcuate or curved contour in cross-section.

2. Clamping jaw arrangement according to claim 1, **characterized in that** the inner surfaces of the retaining cheeks (8) and the outer surfaces of the extension (4) in the region of the connecting webs (7, 10) and/or the connecting grooves (9) are curved over their entire length or at least over a major part of their length.

3. Clamping jaw arrangement according to claim 1 or 2, **characterized in that** the connecting webs (7, 10) and/or connecting grooves (9) form a corrugated contour.

4. Clamping jaw arrangement according to one of the previous claims, **characterized in that** the retaining cheeks (8) each have on their inner sides a corrugated contour with a wave trough-like portion which forms a connecting groove (9) for receiving a connecting web (7) of the jaw (1) and with a wave crest-like portion which adjoins the latter and forms a connecting web (10) which comes into contact with the rear side of the connecting web (7) of the carrier jaw (1).

5. Clamping jaw arrangement with a carrier jaw (1), which defines a support surface (3) on its upper side and has an extension (4) projecting upwards beyond the support surface (3) at its rear end region, and an exchangeable jaw (2), which is exchangeably attached or can be attached to the extension (4) of the carrier jaw (1), two retaining cheeks (8) being provided on the rear side of the exchangeable jaw (2), which laterally encircle the extension (4) of the carrier jaw (1), and connecting webs (7, 10) and connecting grooves (9) being formed on the extension (4) of the carrier jaw (1) and on the inner sides of the retaining cheeks (8), which enclose a predetermined identical angle (α) ≤ 90° with the support surface (3) and engage positively with one another when the exchangeable jaw (2) is inserted from above onto the extension (4) of the carrier jaw (1), and wherein corresponding contact surfaces (5, 6) are provided on a front end face of the extension (4) of the carrier jaw (1) and a rear end face of the exchangeable jaw (2), which contact surfaces come into contact with one another when the exchangeable jaw (2) is inserted onto the carrier jaw (1), and which enclose a predetermined identical angle (γ) ≤ 90° with the support surface (3) of the carrier jaw (1), and securing means (11) for securing the exchangeable jaw (2) on the carrier jaw (1) against removal, **characterized in that** the angle (α) under which the connecting webs (7, 10) and connecting grooves (9) are inclined relative to the support surface (3) is smaller than the angle (γ) which the contact surfaces (5, 6) enclose with the support surface (3).

6. Clamping jaw arrangement according to claim 5, **characterized in that** the angle (α) under which the connecting webs (7, 10) and connecting grooves (9) are inclined relative to the support surface (3) is smaller than the angle (γ) under which the contact surfaces (5, 6) enclose the support surface (3) by at least 0.1°, in particular at least 0.3° and preferably at least 0.5° and/or maximum 8°, in particular maximum 6° and preferably maximum 5°.

7. Clamping jaw arrangement according to one of the previous claims, **characterized in that** the securing means have a locking screw (11) which can be screwed into a threaded bore (12) of the extension (4) open towards the upper side of the extension (4) of the carrier jaw (1), the exchangeable jaw (2) having a contact surface (13) with which the locking screw (11) comes into contact when being screwed into the carrier jaw (1) in order to secure the exchangeable jaw (2) on the carrier jaw (1) against being removed.

8. Clamping jaw arrangement according to claim 7, **characterized in that** the threaded bore (12) encloses an angle (β) < 90° with the support surface (3) so that the exchangeable jaw (2) is pressed in the direction of the contact surface (5) of the extension (4) of the carrier jaw (1) when the locking screw (11) is screwed in.

9. Clamping jaw arrangement according to claim 7 or 8, **characterized in that** a recess (14) for receiving the head (11a) of the locking screw (11) is formed in the extension (4) of the carrier jaw (1), the bottom of the recess (14) lying in particular in a plane perpendicular to the axis of the threaded bore (12).

10. Clamping jaw arrangement according to one of claims 7 to 9, **characterized in that** the exchangeable jaw (2) has a recess (15) on its upper side, on the bottom of which the contact surface (13) is formed.

11. Clamping jaw arrangement according to one of the previous claims, **characterized in that** elastic clamping means are provided on the carrier jaw (1), which exert a compressive force on the exchangeable jaw (2), by means of which the contact surface (6) of the exchangeable jaw (2) is pressed in the direction of the contact surface (5) of the extension (4) of the carrier jaw (1) when the exchangeable jaw (2) is inserted onto the carrier jaw (1).

12. Clamping jaw arrangement according to claim 11, **characterized in that** the elastic clamping means comprise compression spring elements (16) which are held in corresponding receptacles (17) in the extension (4) of the carrier jaw (1) and are in contact with a connecting web (10) of the exchangeable jaw (2) when the exchangeable jaw (2) is inserted onto the carrier jaw (1) in order to exert a compressive force directed away from the contact surface (5) of the carrier jaw (1) onto the connecting webs (10).

13. Clamping jaw arrangement according to claim 12, **characterized in that** the elastic clamping means (16) are positioned in particular such that they exert the compressive force on a lower region of the exchangeable jaw (2) when the exchangeable jaw (2) is inserted onto the carrier Jaw (1).

14. Clamping jaw arrangement according to one of the previous claims, **characterized in that** the exchangeable jaw (2) engages over the carrier jaw (1) in the inserted state in such a way that two retaining webs come into contact with opposite side surfaces of the carrier jaw (1) in order to position the exchangeable jaw on the carrier jaw (1).

## Revendications

1. Dispositif de mâchoire de serrage avec une mâchoire porteuse (1), qui définit une surface d'appui (3) sur sa face supérieure et présente une extension (4) dépassant vers le haut de la surface d'appui (3) dans sa zone d'extrémité arrière, et une mâchoire interchangeable (2), qui est fixée de manière interchangeable ou peut être fixée à l'extension (4) de la mâchoire porteuse (1), deux joues de retenue (8) étant prévues sur la face arrière de la mâchoire interchangeable (2), qui entourent latéralement l'extension (4) de la mâchoire porteuse (1), et des nervures de connexion (7, 10) et des rainures de connexion (9) étant formées sur l'extension (4) de la mâchoire porteuse (1) et sur les côtés intérieurs des joues de retenue (8), qui entourent un angle identique prédéterminé (α) ≤ 90° avec la surface d'appui (3) et s'engagent positivement l'un dans l'autre lorsque la mâchoire interchangeable (2) est insérée par le haut sur l'extension (4) de la mâchoire porteuse (1), et des surfaces de contact correspondantes (5, 6) étant prévues sur la face d'extrémité avant de l'extension (4) de la mâchoire porteuse (1) et la face d'extrémité arrière de la mâchoire d'échange (2), lesquelles surfaces de contact viennent en contact l'une avec l'autre lorsque la mâchoire interchangeable (2) est insérée sur la mâchoire porteuse (1), et qui enferment un angle identique prédéterminé (γ) ≤ 90° avec la surface d'appui (3) de la mâchoire porteuse (1), et avec des moyens de fixation (11) pour fixer la mâchoire interchangeable (2) sur la mâchoire porteuse (1) contre le décollement, **caractérisé en ce que** les surfaces intérieures des joues de retenue (8) et les surfaces extérieures latérales de l'extension (4) dans la zone des nervures de connexion (7, 10) et des rainures de connexion (9) ont un contour arqué ou courbé en section transversale.

2. Dispositif de mâchoire de serrage selon la revendication 1, **caractérisé en ce que** les surfaces intérieures des joues de retenue (8) et les surfaces extérieures de l'extension (4) dans la zone des nervures de connexion (7, 10) et/ou des rainures de connexion (9) sont gablées ou courbées sur toute leur longueur ou au moins sur une grande partie de leur longueur.

3. Dispositif de mâchoire de serrage selon la revendication 1 ou 2, **caractérisé en ce que** les nervures de connexion (7, 10) et/ou les rainures de connexion (9) forment un contour ondulé.

4. Dispositif de mâchoire de serrage selon l'une des revendications précédentes, **caractérisé en ce que** les joues de retenue (8) présentent chacune sur leurs côtés intérieurs un contour en forme d'onde avec une partie en forme de dépression d'onde qui forme une rainure de connexion (9) pour recevoir une nervure de connexion (7) de la mâchoire porteuse (1) et avec une partie en forme de crête d'onde qui est adjacente à cette dernière et forme une nervure de connexion (10) qui vient en contact avec le côté arrière de la rainure de connexion (7) de la mâchoire porteuse (1).

5. Dispositif de mâchoire de serrage avec une mâchoire porteuse (1), qui définit une surface d'appui (3) sur sa face supérieure et présente une extension (4) dépassant vers le haut de la surface d'appui (3) dans sa zone d'extrémité arrière, et une mâchoire interchangeable (2), qui est fixée de manière interchangeable ou peut être fixée à l'extension (4) de la mâchoire porteuse (1), deux joues de retenue (8) étant prévues sur la face arrière de la mâchoire interchangeable (2), qui entourent latéralement l'extension (4) de la mâchoire porteuse (1), et des nervures de connexion (7, 10) et des rainures de connexion (9) étant formées sur l'extension (4) de la mâchoire porteuse (1) et sur les côtés intérieurs des joues de retenue (8), qui entourent un angle identique prédéterminé (α) ≤ 90° avec la surface d'appui (3) et s'engagent positivement l'un dans l'autre lorsque la mâchoire interchangeable (2) est insérée par le haut sur l'extension (4) de la mâchoire porteuse (1), et des surfaces de contact correspondantes (5, 6) étant prévues sur une face d'extrémité avant de l'extension (4) de la mâchoire porteuse (1) et une face d'extrémité arrière de la mâchoire d'échange (2), lesquelles surfaces de contact viennent en contact l'une avec l'autre lorsque la mâchoire interchangeable (2) est insérée sur la mâchoire porteuse (1), et qui enferment un angle identique prédéterminé (γ) ≤ 90° avec la surface de contact (3) de la mâchoire porteuse (1), et des moyens de fixation (11) pour fixer la mâchoire interchangeable (2) sur la mâchoire porteuse (1) contre le décollement, **caractérisé en ce que** l'angle (α) sous lequel les nervures de liaison (7, 10) et les rainures de liaison (9) sont inclinées par rapport à la surface d'appui (3) est plus petit que l'angle (γ) que les surfaces de contact (5, 6) entourent avec la surface d'appui (3).

6. Dispositif de mâchoire de serrage selon la revendication 5, **caractérisé en ce que** l'angle (α) sous lequel les nervures de liaison (7, 10) et les rainures de liaison (9) sont inclinées par rapport à la surface d'appui (3) est plus petit que l'angle (γ) que les surfaces de contact (5, 6) entourent la surface d'appui (3) d'au moins 0,1°, en particulier au moins 0,3° et de préférence au moins 0,5° et/ou maximum 8°, en particulier maximum 6° et de préférence maximum 5°.

7. Dispositif de mâchoire de serrage selon l'une des revendications précédentes, **caractérisé en ce que** les moyens de verrouillage comportent une vis de verrouillage (11) qui peut être vissée dans un alésage fileté (12) de l'extension (4) ouvert vers le côté supérieur de l'extension (4) de la mâchoire porteuse (1), la mâchoire interchangeable (2) présentant une surface de contact (13) avec laquelle la vis de verrouillage (11) vient en contact lorsqu'elle est vissée dans la mâchoire porteuse (1) afin de fixer la mâchoire d'échange (2) sur la mâchoire porteuse (1) pour l'empêcher d'être retirée.

8. Dispositif de mâchoire de serrage selon la revendication 7, **caractérisé en ce que** l'alésage fileté (12) forme un angle (β) ≤ 90° avec la surface d'appui (3) de sorte que la mâchoire interchangeable (2) est pressée dans la direction de la surface de contact (5) de l'extension (4) de la mâchoire porteuse (1) lorsque la vis de verrouillage (11) est vissée.

9. Dispositif de mâchoire de serrage selon la revendication 7 ou 8, **caractérisé en ce qu'**un évidement (14) destiné à recevoir la tête (11a) de la vis de verrouillage (11) est formé dans l'extension (4) de la mâchoire porteuse (1), le fond de l'évidement (14) se trouvant en particulier dans un plan perpendiculaire à l'axe de l'alésage fileté (12).

10. Dispositif de mâchoire de serrage selon l'une des revendications 7 à 9, **caractérisé en ce que** la mâchoire interchangeable (2) présente sur sa face supérieure un évidement (15), sur sa face supérieure, sur le fond duquel est formée la surface de contact (13).

11. Dispositif de mâchoire de serrage selon l'une des revendications précédentes, **caractérisé en ce que** des moyens de serrage élastiques sont prévus sur la mâchoire porteuse (1), qui exercent une force de compression sur la mâchoire interchangeable (2), au moyen de laquelle la surface de contact (6) de la mâchoire interchangeable (2) est pressée dans la direction de la surface de contact (5) de l'extension (4) de la mâchoire porteuse (1) lorsque la mâchoire interchangeable (2) est insérée sur la mâchoire porteuse (1).

12. Dispositif de mâchoire de serrage selon la revendication 11, **caractérisé en ce que** les moyens de serrage élastiques comprennent des éléments de ressort de compression (16) qui sont maintenus dans des réceptacles correspondants (17) dans l'extension (4) de la mâchoire porteuse (1) et sont en contact avec une nervure de connexion (10) de la mâchoire interchangeable (2) lorsque la mâchoire interchangeable (2) est insérée sur la mâchoire porteuse (1) afin d'exercer une force de compression dirigée à l'opposé de la surface de contact (5) de la mâchoire porteuse (1) sur les nervures de connexion (10).

13. Dispositif de mâchoire de serrage selon la revendication 12, **caractérisé en ce que** les moyens de serrage élastiques (16) sont positionnés en particulier de telle sorte qu'ils exercent la force de compression sur une zone inférieure de la mâchoire interchangeable (2) lorsque la mâchoire interchangeable (2) est insérée sur la mâchoire porteuse (1).

14. Dispositif de mâchoire de serrage selon l'une des revendications précédentes, **caractérisé en ce que** la mâchoire interchangeable (2) s'engage sur la mâchoire porteuse (1) à l'état inséré de telle sorte que deux bandes de retenue viennent en contact avec des surfaces latérales opposées de la mâchoire porteuse (1) afin de positionner la mâchoire interchangeable sur la mâchoire porteuse (1).
